# EUROPÄISCHE PATENTANMELDUNG

(11) **EP 2 361 820 A2**
(43) Veröffentlichungstag der Anmeldung: **31.08.2011**
(21) Anmeldenummer: 11152711.5
(22) Anmeldetag: 31.01.2011
(51) Int. Cl.: B62D 5/04

(54) **Fahrzeug-Lenksystem mit elektromotorischer Lenkmoment-Unterstützung**

(30) Priorität: 19.02.2010 DE 102010008572
(71) Anmelder: Bayerische Motoren Werke Aktiengesellschaft, 80809 München (DE)
(72) Erfinder: Honke, Peter, 80935, München (DE); Herold, Peter, 80939, München (DE)

(57) **Zusammenfassung**

Die Erfindung betrifft ein Fahrzeug-Lenksystem mit elektromotorischer Lenkmoment-Unterstützung, wobei der das sog. Unterstützungsmoment bereitstellende Elektromotor bei sehr niedrigen Fahrgeschwindigkeiten von wenigstens annähernd Null oder mit betätigten Rad-Bremsen entweder nicht in der Lage ist, ein Unterstützungsmoment oder Lenkmoment zum Erreichen eines Lenkendanschlages der lenkbaren Fahrzeug-Räder bereitzustellen oder solchermaßen angesteuert wird, dass der besagte Lenkendanschlag nicht erreicht wird, obwohl der Fahrer des Fahrzeugs einen entsprechenden Lenkeinschlag für die lenkbaren Fahrzeugräder vorgibt. Mit einer Änderung dieses genannten Zustands wird der nun wieder ein vom Fahrer gefordertes Unterstützungsmoment in Richtung des Lenkendanschlages abgebende Elektromotor zunächst im Sinne einer reduzierten Lenkmoment-Unterstützung angesteuert wobei diese reduzierte Lenkmoment-Unterstützung durch ein begrenztes maximales Unterstützungsmoment und/oder durch eine begrenzte maximale Verstellgeschwindigkeit oder Verstellbeschleunigung eines einen Lenkeinschlag der lenkbaren Fahrzeug-räder verursachenden Lenkgetriebes definiert sein kann.

## Beschreibung

Die Erfindung betrifft ein Fahrzeug-Lenksystem mit elektromotorischer Lenkmoment-Unterstützung, wobei der das sog. Unterstützungsmoment bereitstellende Elektromotor bei sehr niedrigen Fahrgeschwindigkeiten von wenigstens annähernd Null oder mit betätigten Rad-Bremsen entweder nicht in der Lage ist, ein Unterstützungsmoment oder Lenkmoment zum Erreichen eines Lenk-Endanschlages der lenkbaren Fahrzeug-Räder bereitzustellen oder solchermaßen angesteuert wird, dass der besagte Lenkendanschlag nicht erreicht wird, obwohl der Fahrer des Fahrzeugs einen entsprechenden Lenkeinschlag für die lenkbaren Fahrzeugräder vorgibt. Zum technischen Umfeld wird beispielshalber auf die DE 101 28 068 B4 verwiesen.

Zunächst sei ausdrücklich darauf hingewiesen, dass unter den hier verwendeten Begriff des Unterstützungsmoments jegliches von einem Stellmotor bereit gestellte Lenkmoment zum Einschlagen lenkbarer Fahrzeug-Räder fallen soll, also auch ein Lenkmoment, welches der genannte Stellmotor im Falle eines sog. Steer-by-wire-Systems alleinig aufbringt, ohne dass ein vom Fahrer an sein Lenkrad angelegtes sog. Handmoment zum Einschlagen der lenkbaren Räder mit beiträgt. Ausdrücklich gehört jedoch auch der letztgenannte Fall zur vorliegenden Erfindung, nämlich dass ― wie an heutigen Kraftfahrzeugen üblich ― ein Stellmotor ein zusätzliches Unterstützungsmoment (zusätzlich zum Handmoment des Fahrers) beim Lenken aufbringt.

Es ist grundsätzlich bekannt, dass an einer sog. Servo-Lenkung eines Kraftfahrzeugs bei sehr niedrigen Fahrgeschwindigkeiten des Fahrzeugs und insbesondere im Stillstand desselben dann, wenn gleichzeitig an den lenkbaren Fahrzeug-Rädern ein Lenkeinschlag in der Nähe des konstruktiv vorgegebenen Endanschlags dargestellt werden soll, der Leistungsbedarf eines das Lenk-Unterstützungsmoment bereitstellenden Stellmotors betragsmäßig sehr hoch ist. Gleiches gilt, wenn die lenkbaren Fahrzeug-Räder gebremst, d.h. deren Rad-Bremsen betätigt sind, wodurch deren auch nur geringfügige Rotation um deren Drehachse behindert ist.

Ist in einem Kraftfahrzeug eine elektromotorische Lenkunterstützung vorgesehen, d.h. wird das sog. Unterstützungsmoment von einem Elektromotor direkt oder indirekt in ein Lenkgetriebe oder dgl. eingeleitet, so wird angestrebt, diesen Elektromotor nicht zu groß zu dimensionieren, d.h. die Nennleistung dieses Elektromotor soll nicht unnötig groß gewählt, sondern auf die überwiegend auftretenden Betriebszustände des Kraftfahrzeugs ausgelegt werden. Es machte somit wenig Sinn, den besagten Elektromotor solchermaßen zu dimensionieren, dass er im Stillstand des Fahrzeugs, bei betätigten Rad-Bremsen oder auch nur bei sehr geringer Fahrzeug-Fahrgeschwindigkeit die lenkbaren Fahrzeug-Räder bis zu deren konstruktiv vorgegebenen Endanschlag einzuschlagen in der Lage ist. Aber auch falls der Elektromotor leistungsmäßig hierzu in der Lage wäre, beispielsweise weil der Reibwert zwischen den Rad-Reifen und der Fahrbahn sehr niedrig ist, so lässt man üblicherweise durch entsprechende Ansteuerung des besagten Elektromotors nicht zu, dass dieser bei Fahrzeug-Stillstand, gebremsten (lenkbaren) Rädern oder bei Fahrgeschwindigkeiten von wenigstens annähernd Null die lenkbaren Räder in die Position des Lenk-Endanschlages bringt, da mit Erreichen dieses Endanschlags im Stand eine thermische Überlastung des Elektromotors auftreten könnte. Somit ist im Stand der Technik der das sog. Unterstützungsmoment bereitstellende Elektromotor bei sehr niedrigen Fahrgeschwindigkeiten von wenigstens annähernd Null oder bei betätigten Rad-Bremsen entweder nicht in der Lage, ein Unterstützungsmoment oder Lenkmoment zum Erreichen eines Lenk-Endanschlages der lenkbaren Fahrzeug-Räder bereitzustellen oder er wird solchermaßen angesteuert, dass der besagte Lenkendanschlag nicht erreicht wird.

Wird aus einem solchen Betriebszustand (sehr niedrige Fahrgeschwindigkeit von wenigstens annähernd Null oder betätigten Rad-Bremsen und gleichzeitiger Lenkvorgabe des Fahrers in Richtung eines der Lenk-Endanschläge) heraus das Fahrzeug zumindest geringfügig beschleunigt, so wird die beschriebene Restriktion des besagten Elektromotors aufgehoben und es ist dieser dann entweder in der Lage, die lenkbaren Räder in ihren Endanschlag hinein zu verschwenken oder er wird mit einer solchen Beschleunigung des Fahrzeugs, der gegebenenfalls zunächst ein Lösen der Rad-Bremsen vorangeht, in diesem Sinne, nämlich die lenkbaren Räder in ihren Endanschlag hinein zu verschwenken, angesteuert. Da sich jedoch Elektromotoren, die zur Bereitstellung eines Unterstützungsmoments im Lenksystem vom Kraftfahrzeugen zum Einsatz kommen, durch eine sehr hohe Dynamik auszeichnen, d.h. deren Stellgeschwindigkeit ist üblicherweise sehr hoch, wird dann binnen kürzester Zeit der Lenk-Endanschlag erreicht, was der Fahrer an seinem Lenkrad (bzw. allgemein an seiner Lenkhandhabe) in Form eines relativ harten Stoßes verspürt. Ein solches Verhalten ist jedoch unerwünscht.

Eine Abhilfemaßnahme für diese geschilderte Problematik aufzuzeigen, ist Aufgabe der vorliegenden Erfindung.

Die Lösung dieser Aufgabe ist für ein Fahrzeug-Lenksystem nach dem Oberbegriff des Anspruchs 1 dadurch gekennzeichnet, dass mit einer Änderung des im Oberbegriff des Anspruchs 1 genannten Zustands der nun wieder ein vom Fahrer gefordertes Unterstützungsmoment in Richtung des Lenkendanschlages abgebende Elektromotor zunächst im Sinne einer reduzierten Lenkmoment-Unterstützung angesteuert wird. Erfindungsgemäß wird von einer geeigneten elektronischen Steuereinheit erkannt, dass ein vorhergehend ausführlich geschilderter Zustand vorliegt, nämlich dass zunächst bei sehr niedriger Fahrgeschwindigkeit oder Fahrzeug-Stillstand, ggf. in Verbindung mit betätigten Rad-Bremsen, an den lenkbaren Rädern der Lenk-Endanschlag nicht eingestellt wird, obwohl der Fahrer dies grundsätzlich vorgibt, und dass daraufhin, wenn das Fahrzeug geringfügig beschleunigt wird oder auch nur die zunächst betätigten Rad-Bremsen gelöst werden, nun der Lenk-Endanschlag eingestellt werden könnte. Erfindungsgemäß wird daraufhin der das Lenk-Unterstützungsmoment (oder Lenkmoment) bereitstellende Elektromotor solchermaßen angesteuert, dass dieser Elektromotor nicht mit seiner maximalen Dynamik zum Lenken der lenkbaren Räder beiträgt. Diese werden daher nicht so schnell und/oder nicht so leichtgängig wie bei voller Unterstützung durch den Elektromotor (bzw. bei maximaler Leistungsabgabe des Elektromotors) in Richtung ihres Endanschlages bewegt, so dass der Fahrer bei Erreichen dieses Lenk-Endanschlages eine weniger abrupte Begrenzung seiner Lenkrad-Bewegung verspürt.

Grundsätzlich gibt es verschiedene Möglichkeiten, wie eine solche erfindungsgemäße reduzierte Lenkmoment-Unterstützung umgesetzt werden kann. So kann diese durch ein begrenztes maximales Unterstützungsmoment definiert sein, indem der besagte Elektromotor eben nur ein reduziertes Moment abgeben darf, oder es kann die Verstellgeschwindigkeit oder die Verstellbeschleunigung eines einen Lenkeinschlag der lenkbaren Fahrzeug-räder verursachenden Lenkgetriebes begrenzt sein bzw. der besagte Elektromotor kann solchermaßen angesteuert werden, dass ein vorgegebener Grenzwert für die Verstellgeschwindigkeit oder Verstellbeschleunigung nicht überschritten wird. Selbstverständlich sind auch beliebige Kombinationen dieser genannten Maßnahmen möglich; die detaillierte Ausgestaltung wird vorzugsweise im Fahrversuch festgelegt, wobei nochmals ausdrücklich erwähnt sei, dass die im kennzeichnenden Teil des Anspruchs 1 angeführte "Änderung d(ies)es genannten Zustands" darin bestehen kann, dass entweder nur die zuvor betätigten Rad-Bremsen der lenkbaren Räder gelöst werden, ohne dass das Fahrzeug hierdurch in Bewegung versetzt wird, oder dass das Fahrzeug geringfügig beschleunigt wird.

## Patentansprüche

1. Fahrzeug-Lenksystem mit elektromotorischer Lenkmoment-Unterstützung, wobei der das sog. Unterstützungsmoment bereitstellende Elektromotor bei sehr niedrigen Fahrgeschwindigkeiten von wenigstens annähernd Null oder mit betätigten Rad-Bremsen entweder nicht in der Lage ist, ein Unterstützungsmoment oder Lenkmoment zum Erreichen eines Lenkendanschlages der lenkbaren Fahrzeug-Räder bereitzustellen oder solchermaßen angesteuert wird, dass der besagte Lenkendanschlag nicht erreicht wird, obwohl der Fahrer des Fahrzeugs einen entsprechenden Lenkeinschlag für die lenkbaren Fahrzeugräder vorgibt,
**dadurch gekennzeichnet, dass** mit einer Änderung dieses genannten Zustands der nun wieder ein vom Fahrer gefordertes Unterstützungsmoment in Richtung des Lenkendanschlages abgebende Elektromotor zunächst im Sinne einer reduzierten Lenkmoment-Unterstützung angesteuert wird

2. Fahrzeug-Lenksystem nach Anspruch 1,
**dadurch gekennzeichnet, dass** die reduzierte Lenkmoment-Unterstützung durch ein begrenztes maximales Unterstützungsmoment und/oder durch eine begrenzte maximale Verstellgeschwindigkeit oder Verstellbeschleunigung eines einen Lenkeinschlag der lenkbaren Fahrzeugräder verursachenden Lenkgetriebes definiert ist.
